# EUROPEAN PATENT APPLICATION

(11) **EP 3 770 757 A1**
(43) Date of publication of application: **27.01.2021**
(21) Application number: 19770593.2
(22) Date of filing: 19.03.2019
(51) Int. Cl.: G06F 9/455

(54) **METHOD AND DEVICE FOR GENERATING ACTION SEQUENCE OF ROBOT**

(30) Priority: 21.03.2018 CN 201810236770
(71) Applicant: Beijing Orion Star Technology Co., Ltd., Beijing 100026 (CN)
(72) Inventor: ZHANG, Yangang, Beijing 100026 (CN)
(74) Representative: Schwarz & Partner Patentanwälte OG
(86) International application number: PCT/CN2019/078746
(87) International publication number: WO 2019/179440

(57) **Abstract**

The present disclosure proposes a method and a device for generating an action sequence of a robot. The method comprises: acquiring a directed graph comprising multiple nodes for instructing actions of a robot and directed edges connecting different nodes; acquiring individual target actions related to a task and an execution order of the target actions; performing, in the directed graph, a search in a direction instructed by the directed edges, and obtaining a target path, nodes on the target path comprising target nodes corresponding to the target actions, respectively, and an order of the target nodes on the target path matching the execution order of the target actions; and generating an action sequence of the robot according to the actions instructed by the target path and the execution order thereof. The invention automatically determines, on the basis of the directed graph, actions required to be performed by a robot to complete a task, and a sequence thereof, thereby improving efficiency of robot control, and providing support for a robot to flexibly adapt to different scenarios and tasks.

## Description

### CROSS-REFERENCE TO RELATED APPLICATIONS

This application claims priority to Chinese Patent Application No. 201810236770.4, filed with the State Intellectual Property Office of P. R. China on March 21, 2018 by BEIJING ORION STAR TECHNOLOGY CO., LTD., entitled "Method and Device for Generating Action Sequence of Robot".

### TECHNICAL FIELD

The present disclosure relates to a field of robot control technologies, and more particularly, to a method and an apparatus for generating an action sequence of a robot.

### BACKGROUND

Currently, robots are widely used in daily life to perform corresponding tasks according to the requirements of the scene for freeing users from chores such as sweeping floor and pouring coffee.

In the related art, the robot is controlled by manual teaching/playback. Teaching/playback enables a robot to repeatedly play back an operation program stored through the teaching programming. The teaching programming refers a programming completed by the following acts: manually guiding robot end actuators (grippers, tools, welding guns, and spray guns installed at an end of a robot joint structure), or manually guiding a mechanical simulation device, or using a teaching box (a handheld device connected to a control system to program or move the robot) to make the robot complete expected actions. Operation program (task program) is a set of motion and auxiliary function instructions to determine specific expected operations of the robot. This type of program is usually compiled by users. Since programming of this kind of robot is realized by real-time online teaching program, the robot operates based on the memory to realize playback.

### SUMMARY

The present disclosure provides a method for generating an action sequence of a robot. Based on the directed graph, this method automatically determines various actions and a sequence for the robot to complete a task, which improves convenience of robot control, provides support for the robot to adapt to flexible and changeable scene tasks, and solves the problems of low control efficiency of the robot is due to manual teaching of the robot and large task load when introducing new tasks in the related art.

The present disclosure provides an apparatus for generating an action sequence of a robot.

The present disclosure provides a computer device.

The present disclosure provides a computer readable storage medium.

In a first aspect, embodiments of the present disclosure provide a method for generating an action sequence of a robot. The method includes: obtaining a directed graph, in which the directed graph comprises a plurality of nodes for instructing actions of the robot, and directed edges connecting the nodes; obtaining target actions involved in a task, and an execution order of the target actions; in the directed graph, performing a search in directions indicated by the directed edges to obtain a target path, in which nodes on the target path comprises target nodes corresponding to the target actions, and an order of the target path passing through the target nodes matches an execution order of the target actions; and generating the action sequence of the robot according to actions instructed by the target path and an execution order of the actions instructed by the target path.

Based on the directed graph, the method for generating an action sequence of a robot according to embodiments of the present disclosure automatically determines various actions and a sequence for the robot to complete a task, which improves convenience of robot control, provides support for the robot to adapt to flexible and changeable scene tasks, and solves the problems of low control efficiency of the robot is due to manual teaching of the robot and large task load when introducing new tasks in the related art.

In addition, the method for generating an action sequence of a robot according to embodiments of the present disclosure includes the following additional technical features.

Optionally, the nodes in the directed graph include first nodes for instructing sets of consecutive actions and second nodes for instructing static actions; and in the directed graph, performing the search in the directions indicated by the directed edges to obtain the target path includes: in the directed graph, performing the search in the directions indicated by the directed edges starting from a preset one of the second nodes, passing through the target nodes, and ending at the preset one of the second nodes, in which the target nodes belong to the first nodes for instructing the sets of consecutive actions; and according to paths obtained after the search, determining the target path.

Optionally, each directed edge in the directed graph has a weight, and the weight is configured to indicate a duration between a time of the robot executing an action instructed by a node connected by the directed edge to a time of the robot executing an action instructed by another node connected by the directed edge; and in the directed graph, performing the search in the directions indicated by the directed edges to obtain the target path includes: in the directed graph, performing the search in the directions indicated by the directed edges, wherein when at least two paths are obtained after the search, weights of the directed edges traversed by each path are summed to obtain a total weight of each path; and determining a path with the shortest duration indicated by the total weight as the target path.

Optionally, the static actions indicated by the second nodes comprise at least one of a preset reset action, a start action in a set of consecutive actions indicated by each first node and an end action in the set of consecutive actions indicated by each first node.

Optionally, the static actions indicated by the second nodes include a transition action configured to connect two actions executed before and after the transition action; and after generating the action sequence of the robot, the method further includes: controlling the robot according to the action sequence of the robot; if there is an abnormality in the process of controlling the robot, determining the last action executed before the abnormality, and determining a first action to be performed after the abnormality; in the directed graph, adding a second node corresponding to the transition action located between a node corresponding to the last action and a node corresponding to the first action; according to a direction of a directed edge between the node corresponding to the last action and the node corresponding to the first action, determining a direction of a directed edge between the second node corresponding to the transition action and the node corresponding to the last action, and determining a direction of a directed edge between the second node corresponding to the transition action and the node corresponding to the first action; and deleting the directed edge between the node corresponding to the last action and the node corresponding to the first action.

Optionally, adding the second node corresponding to the transition action includes: determining parameters of the transition action according to a location of an obstacle indicated by the abnormality; and according to the parameters of the transition action, adding the second node corresponding to the transition action.

Optionally, the sets of consecutive actions indicated by the first nodes in the directed graph is determined based on subtasks obtained by disassembling the task, and each set of consecutive actions is configured to execute a corresponding subtask, and the directions of the directed edges in the directed graph are determined according to a logical sequence of different sets of consecutive actions.

Optionally, after generating the action sequence of the robot, the method further includes: arranging control instructions associated with actions in the action sequence of the robot according to the execution order of the actions; and controlling the robot according to the control instructions arranged.

In a second aspect, embodiments of the present disclosure provide an apparatus for generating an action sequence of a robot. The apparatus includes: a first obtaining module, configured to obtain a directed graph, wherein the directed graph comprises a plurality of nodes for instructing actions of the robot, and directed edges connecting the nodes; a second obtaining module, configured to obtain target actions involved in a task, and an execution order of the target actions; a searching module, configured to, in the directed graph, perform a search in directions indicated by the directed edges to obtain a target path, wherein nodes on the target path comprises target nodes corresponding to the target actions, and an order of the target path passing through the target nodes matches an execution order of the target actions; and a controlling module, configured to generate the action sequence of the robot according to actions instructed by the target path and an execution order of the actions instructed by the target path.

Based on the directed graph, the apparatus for generating an action sequence of a robot according to embodiments of the present disclosure automatically determines various actions and a sequence for the robot to complete a task, which improves convenience of robot control, provides support for the robot to adapt to flexible and changeable scene tasks, and solves the problems of low control efficiency of the robot is due to manual teaching of the robot and large task load when introducing new tasks in the related art.

In addition, the apparatus for generating an action sequence of a robot according to embodiments of the present disclosure includes the following additional technical features.

Optionally, the nodes in the directed graph include first nodes for instructing sets of consecutive actions and second nodes for instructing static actions; and the searching module is further configured to, in the directed graph, perform the search in the directions indicated by the directed edges starting from a preset one of the second nodes, passing through the target nodes, and ending at the preset one of the second nodes, in which the target nodes belong to the first nodes for instructing the sets of consecutive actions; and according to paths obtained after the search, determine the target path.

Optionally, each directed edge in the directed graph has a weight, and the weight is configured to indicate a duration between a time of the robot executing an action instructed by a node connected by the directed edge to a time of the robot executing an action instructed by another node connected by the directed edge; and the searching module is further configured to, in the directed graph, perform the search in the directions indicated by the directed edges, wherein when at least two paths are obtained after the search, weights of the directed edges traversed by each path are summed to obtain a total weight of each path; and determine a path with the shortest duration indicated by the total weight as the target path.

Optionally, the static actions indicated by the second nodes include a transition action configured to connect two actions executed before and after the transition action; and the controlling module is further configured to: control the robot according to the action sequence of the robot; if there is an abnormality in the process of controlling the robot, determine the last action executed before the abnormality, and determine a first action to be performed after the abnormality; in the directed graph, add a second node corresponding to the transition action located between a node corresponding to the last action and a node corresponding to the first action; according to a direction of a directed edge between the node corresponding to the last action and the node corresponding to the first action, determine a direction of a directed edge between the second node corresponding to the transition action and the node corresponding to the last action, and determine a direction of a directed edge between the second node corresponding to the transition action and the node corresponding to the first action; and delete the directed edge between the node corresponding to the last action and the node corresponding to the first action.

Optionally, the control module is configured to determine parameters of the transition action according to a location of an obstacle indicated by the abnormality; and according to the parameters of the transition action, add the second node corresponding to the transition action.

Optionally, the control module is further configured to: arrange control instructions associated with actions in the action sequence of the robot according to the execution order of the actions; and control the robot according to the control instructions arranged.

In a third aspect, embodiments of the present disclosure provide a computer device, and the computer device includes: a memory, a processor, and a computer program stored in the memory and capable of running on the processor, in which when the processor executes the program, the method for generating the action sequence of the robot according to the above embodiments is implemented.

In a fourth aspect, embodiments of the present disclosure provide a computer-readable storage medium having a computer program stored thereon, in which the program is executed by a processor to implement the method for generating the action sequence of the robot according to the above embodiments.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
FIG. 1 is a flowchart of a method for generating an action sequence of a robot according to an embodiment of the present disclosure.
FIG. 2 is a flowchart of a method for generating an action sequence of a robot according to another embodiment of the present disclosure.
FIG. 3 is a flowchart of a method for generating an action sequence of a robot according to yet another embodiment of the present disclosure.
FIG. 4(a) is a schematic diagram of a scene of a method for generating an action sequence of a robot according to an embodiment of the present disclosure.
FIG. 4(b) is a schematic diagram of a scene of a method for generating an action sequence of a robot according to another embodiment of the present disclosure.
FIG. 4(c) is a schematic diagram of a scene of a method for generating an action sequence of a robot according to yet another embodiment of the present disclosure.
FIG. 4(d) is a schematic diagram of a scene of a method for generating an action sequence of a robot according to still another embodiment of the present disclosure.
FIG. 5 is a flowchart of a method for generating an action sequence of a robot according to still another embodiment of the present disclosure.
FIG. 6 is a schematic diagram of an apparatus for generating an action sequence of a robot according to an embodiment of the present disclosure.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

A method and an apparatus for generating an action sequence of a robot according to embodiments of the present disclosure are described below with reference to the drawings.

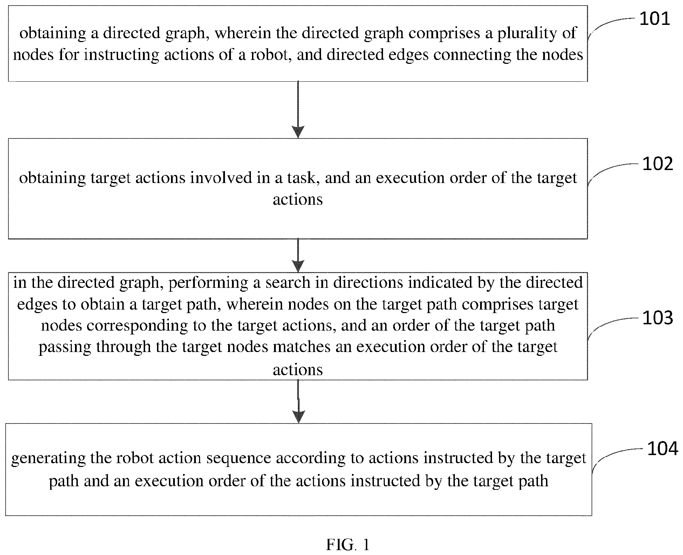

FIG. 1 is a flowchart of a method for generating an action sequence of a robot according to an embodiment of the present disclosure. As illustrated in FIG. 1, the method includes the following steps.

At step 101, a directed graph is obtained, in which the directed graph includes a plurality of nodes for instructing actions of a robot, and directed edges connecting the nodes.

It is understood that when the robot executes a scene task, the task is regarded as being composed of a plurality of actions. Between flexible and changeable tasks, when splitting into corresponding actions, each action has relative consistency. For example, when the robot pours coffee or boil water, both "picking up" and "opening" actions are included.

The consistency of this kind of actions is embodied by nodes instructing the robot actions according to the action execution principle of the robot. The nodes instructing the robot action includes position elements of completed action such as initial pose and end pose executed by the robot. Therefore, in the embodiments of the present disclosure, a directed graph is constructed based on the nodes corresponding to the robot actions shared between tasks. The directed graph includes nodes instructing robot actions corresponding to the plurality of tasks that are flexible and changeable in the execution scene.

That is, in order to solve the problem that in the related art, the manual teaching and re-implementing method required to control the robot results in low robot control efficiency, in the embodiments of the present disclosure, the plurality of nodes instructing the robot actions are introduced and connected by directed edges, in which the directed edges between the nodes are used to indicate the order of execution between the nodes, and the plurality of nodes connected by the directed edges form the directed graph.

Therefore, on the one hand, in order to meet the task requirements of the current scene, the relevant robot action sequence is automatically generated based on the matching of the relevant nodes on the directed graph, which improves the efficiency of robot control and provides a way to meet flexible scene tasks. On the other hand, the directed graph is composed of nodes, thus expanding new tasks or updating task implementation mode are realized by adding, deleting, and updating connection methods on the basis of original nodes, this method has high performance and strong stability.

In practical applications, according to the requirements of the scenario task, the target path required to complete the current scenario task is automatically generated based on the specific actions indicated by the plurality of related nodes and the directed edges between the plurality of the related nodes. Through the plurality of related nodes indicated by the target path and the node execution sequence indicated by the directed edges between the plurality of the related nodes, the current task requirements are executed.

Therefore, in practical applications, in order to control the robot according to the requirements of the current scene task, in the embodiments of the present disclosure, a directed graph is obtained at first, the directed graph includes a plurality of nodes for instructing actions of a robot, and directed edges connecting the nodes. The directed edges connecting different nodes are used to indicate the execution order of the nodes.

At step 102, target actions involved in a task and an execution order of the target actions are obtained.

As described above, the task actually is composed of a plurality of actions. For example, the scene task of "making a cup of coffee" actually consists actions such as "picking up a cup", "putting the cup under a coffee machine", and "pressing a starting button on the coffee machine". Therefore, in order to control the robot to meet the current task, the target actions involved in the task are obtained, and the execution sequence of the target actions is determined. The execution sequence of the target actions is determined according to the action execution logic. For example, the action of "putting down the cup" must be after the action of "picking up the cup".

At step 103, in the directed graph, a search is performed in directions indicated by the directed edges to obtain a target path, in which nodes on the target path include target nodes corresponding to the target actions, and an order of the target path passing through the target nodes matches an execution order of the target actions.

At step 104, the action sequence of the robot is generated according to actions instructed by the target path and an execution order of the actions instructed by the target path.

In detail, in the embodiments of the present disclosure, the actions are actually instructed by the plurality of nodes for instructing actions. Therefore, after determining the target actions and the execution order of the target actions, in the directed graph, the target path is obtained by searching in directions indicated by the directed edges, in which the nodes on the target path comprises target nodes corresponding to the target actions, and an order of the target path passing through the target nodes matches an execution order of the target actions.

Furthermore, an action sequence of a robot is generated according to the actions indicated by the target path and its execution sequence, so that the robot implements the corresponding scene task by executing the action sequence.

It should be noted that, according to the different robot control principles, the ways to control the robot to execute actions in the corresponding action sequence are different. In some possible examples, the control instructions of the associated actions are arranged according to the execution order of each action in the action sequence of the robot, and then the robot is controlled according to the arranged control instructions.

Based on the above description, it is not difficult to understand that the target path in the embodiment of the present disclosure is determined by two factors, i.e., the nodes instructing the robot action, and the execution sequence determined by the directed edges between the nodes. The combination of the two factors may generate the corresponding target paths to achieve different tasks.

In order to describe the process of determining the target path more clearly, the process is described with reference to the example embodiments below.

In an embodiment of the present disclosure, the nodes in the directed graph include first nodes for instructing sets of consecutive actions, and the sets of consecutive actions corresponding to the first nodes are determined according to the subtasks obtained by disassembling the task, and the sets of consecutive actions are used to perform a corresponding subtask. For example, if the current task is "serving beverage", the task is disassembled into subtasks, such as "serving Americano", and "serving latte" according to the task.

The nodes in the directed graph include second nodes for instructing static actions. The directions of the directed edges in the directed graph including the first nodes and the second nodes are determined according to the logical sequence of the corresponding different sets of consecutive actions, that is, the logical sequence between subtasks. The static actions instructed by the second nodes is configured to complete the target actions of the current scene task. For example, if the current subtask is "making Americano", then the target actions of the current scene task are "picking up a cup", "putting the cup under a coffee machine", and "pressing a starting button on the coffee machine".

The static action indicated by the second nodes include relatively static location elements of at least one of a preset reset action (the reset action is used to control the robot to always be in the fixed initial state indicated by the reset action at the end of the execution of the task, so as to ensure that the robot executes the task in a closed-loop operation mode from the start of the reset action to the end of the reset action, which is convenient for controlling the robot), a start action in a set of consecutive actions indicated by each first node and an end action in the set of consecutive actions indicated by each first node (for example, only the start action in the set of consecutive actions indicated by the first nodes, or only the end action in the set of consecutive actions indicated by the first nodes, or the start action and end action in the set of consecutive actions indicated by the first nodes).

It is understood that in the embodiments of the present disclosure, the first node and the second node are common nodes, and based on the mutual conversion relation between nodes, directed edges are used to construct a directed graph. The target path is obtained by combining the first nodes and the second nodes in a certain order according to the task requirements. The combined target path not only describes the spatial transformation relation between the actions indicated by the nodes, but also describes the execution logic relation between the actions. For example, when the current task is "making Americano", in the nodes that the generated target path passes through, the previous step of the "reset position" must be "putting down the cup". The execution logic of the directed graph guarantees the consistency between the execution logic when passing the target path and the logic for executing the corresponding task in the actual application, thereby ensuring the stability and practicability of the directed graph.

Since the robot needs a certain amount of execution space redundancy when performing actions to ensure that the robot does not collide in the process of performing tasks, such as its own collision or collision with obstacles, thus it is necessary to ensure that the robot can move freely between the nodes when passing through the nodes of the target path, the second nodes in the embodiment of the present disclosure also include a transition action used to connect the actions instructed by the two nodes executed before and after the transition action to avoid collisions caused by the robot directly transferring from the start action to the end action.

It should be noted that the addition of the second node corresponding to the transition action is pre-set according to the robot's actions during the execution of the action and the space required for the execution of the action, or the second node corresponding to the transition action is added or updated according to the situation when the robot executing the actions.

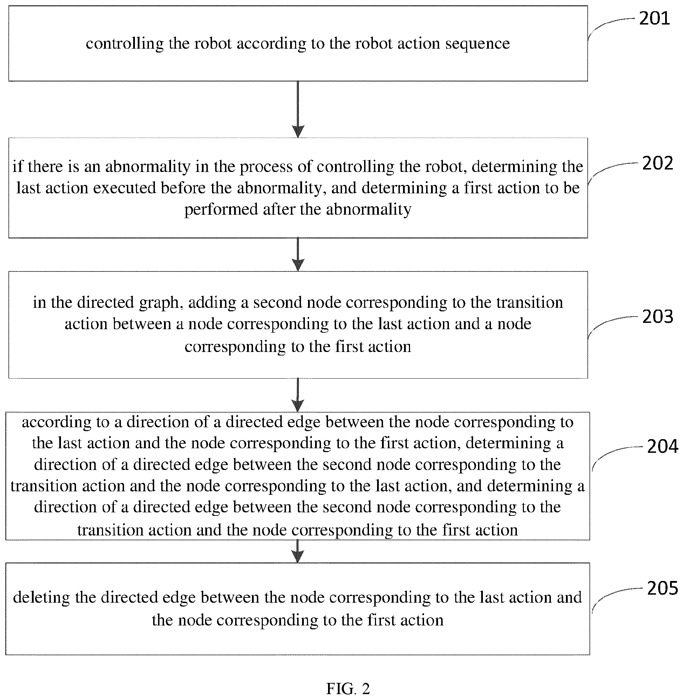

In detail, as a possible implementation, when the processing method for the second node corresponding to the transition action is to add or update the second node corresponding to the transition action by the robot executing the action. As illustrated in FIG. 2, this method includes the following steps.

At step 201, the robot is controlled according to the action sequence of the robot.

At step 202, if there is an abnormality in the process of controlling the robot, the last action executed before the abnormality, and a first action to be performed after the abnormality are determined.

At step 203, in the directed graph, a second node corresponding to the transition action added between a node corresponding to the last action and a node corresponding to the first action.

It is understood that the reason for the abnormality in the process of controlling the robot may be caused by lack of active space, collision with itself or collision with external obstacles when the robot switches from the previous node to the current node. Therefore, in order to ensure the continuity of switching from the previous node to the current node, the second node corresponding to the transition action is introduced between the previous node and the current node.

In detail, the last action performed before the abnormality occurs, and the first action to be performed after the abnormality are determined, that is, the previous node and the current node are determined, and in the directed graph, in the directed graph, a second node corresponding to the transition action is added between a node corresponding to the last action and a node corresponding to the first action.

In an embodiment of the present disclosure, in order to ensure that the introduced second node corresponding to the transition action can realize free switching between nodes. According to the obstacle position indicated by the abnormality, the parameters of the transition action, such as the moving direction, the moving distance, and the moving speed, are determined, and then, according to the parameters of the transition action, the second node of the transition action is added.

At step 204, according to a direction of a directed edge between the node corresponding to the last action and the node corresponding to the first action, a direction of a directed edge between the second node corresponding to the transition action and the node corresponding to the last action is determined, and a direction of a directed edge between the second node corresponding to the transition action and the node corresponding to the first action is determined.

At step 205, the directed edge between the node corresponding to the last action and the node corresponding to the first action is deleted.

Since the directed graph includes not only nodes, but also directed edges between the nodes, in order to ensure the effectiveness of adding the second node corresponding to the transition action, after adding the second node corresponding to the transition action, directed edge s of the second node corresponding to the transition action is added.

In detail, according to the directions of the directed edges between the node corresponding to the last action and the node corresponding to the first action, the direction of the directed edge s between the second node corresponding to the transition action and the node corresponding to the last action, and the direction of the directed edge between the second node corresponding to the transition action and the node corresponding to the first action are determined. The direction of the directed edge is determined based on the execution logic of the action of the node corresponding to the last action and the node corresponding to the first action to ensure that the node corresponding to the last action is transferred to the node corresponding to the first action. At this time, the directed edge between the node corresponding to the last action and the node corresponding to the first action is deleted to realize transition connection between the node corresponding to the last action and the node corresponding to the first action through the second node corresponding to the transition action.

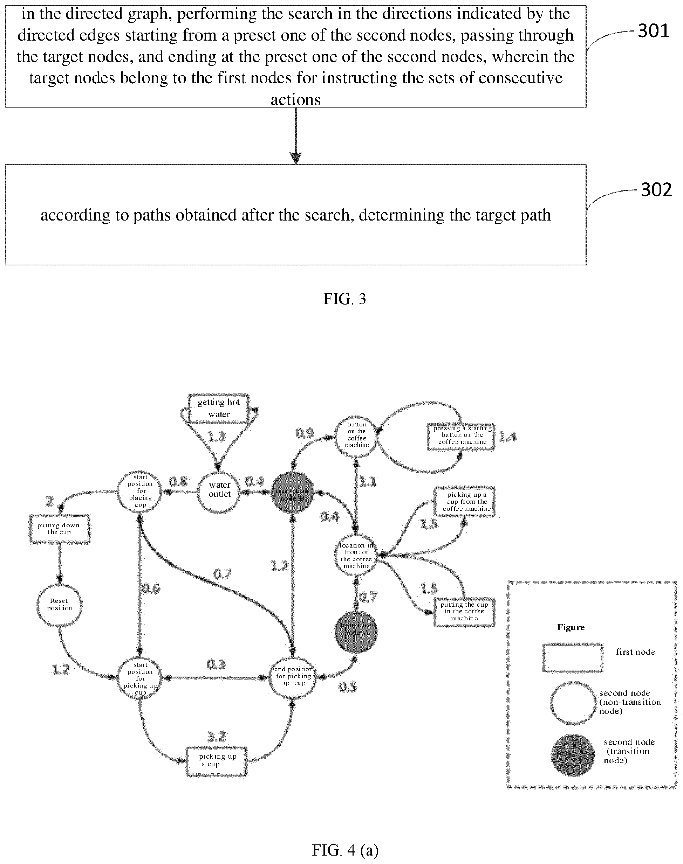

Further, as illustrated in FIG. 3, the method of obtaining the target path is as follows.

At step 301, in the directed graph, the search is performed in the directions indicated by the directed edges starting from a preset one of the second nodes, passing through the target nodes, and ending at the preset one of the second nodes, in which the target nodes belong to the first nodes for instructing the sets of consecutive actions.

At step 302, according to paths obtained after the search, the target path is determined.

In detail, according to the task execution logic, a start second node and an end second node are preset. For example, if the current task is "making Americano", the preset start second node is "picking up a cup", the end second node is the "reset position", and then, in the directed graph, starting from the preset second node, after each target node is searched in the direction indicated by the directed edges, and the path is completed at the preset second node. The target node belongs to the first node used to indicate a set of consecutive actions, and the target path is determined according to the searched path.

In order to make the process of determining the target path in the embodiments of the present disclosure more intuitive, specific application scenarios are described below as examples.

In this example, the current scene is a coffee robot, and the corresponding directed graph is shown in FIG. 4(a). As illustrated in FIG. 4(a), the first node in the directed graph includes "putting down the cup" and "getting hot water", "removing the cup from the coffee machine", and "putting the cup into the coffee machine". The second node includes "start position for placing coffee cup", "reset position", and "transition node". Referring to FIG. 4(a), the direction of the arrow in the directed graph is used to indicate the directed edge between nodes.

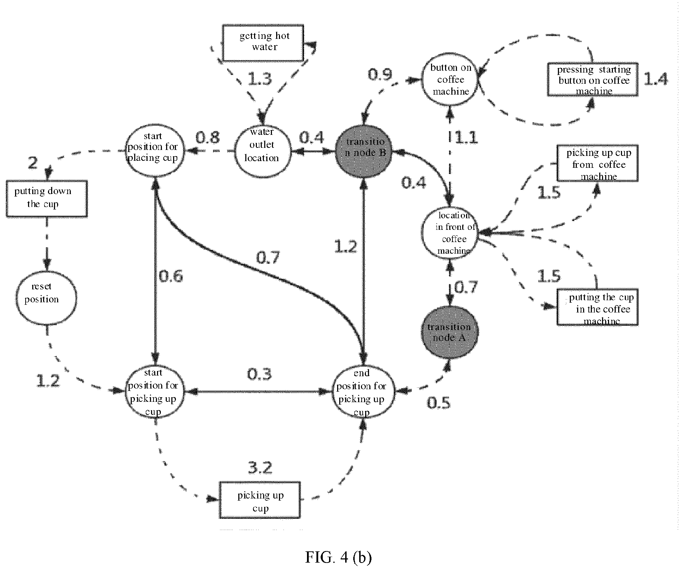

When the current task is "making Americano", the target nodes of a set of consecutive actions indicating the task are provided as follows. The relevant first nodes are "picking up the cup", "putting the cup into the coffee machine", and "getting hot water". The preset start second node is "start position for placing coffee cup", and the preset end second node is "reset position". Then the path starts from the preset second node and moves along the direction of the search sequence of the direction indicated by the edges and passes through each target node and ends at the preset second node "reset position". The determined target path is shown by the dashed line in FIG. 4(b). As illustrated in FIG. 4(b), the target path combines the related first node and second node in the execution order to complete the current task.

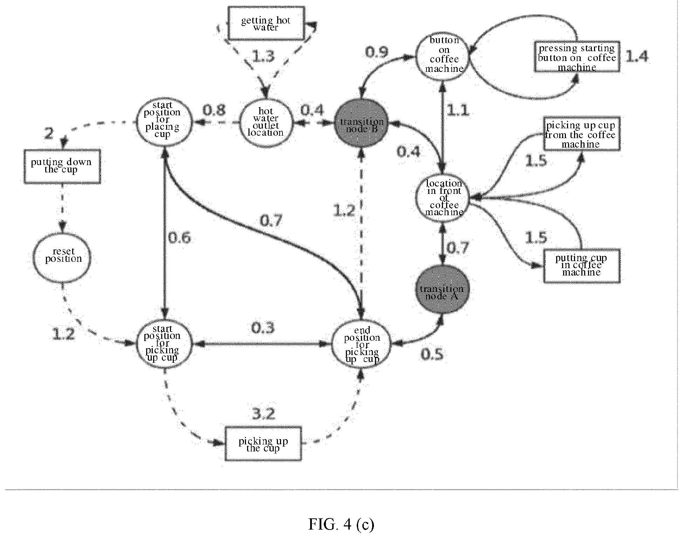

When the current task is "getting hot water", the target nodes of a set of consecutive actions indicating the task are provided as follows. The relevant first nodes are "picking up the cup", and "getting hot water". The preset start second node is "start position for placing coffee cup", and the preset end second node is "reset position". Then the path starts from the preset second node and moves along the direction of the search sequence of the direction indicated by the edges and passes through each target node and ends at the preset second node "reset position". The determined target path is shown by the dashed line in FIG. 4(c). As illustrated in FIG. 4(c), the target path combines the related first node and second node in the execution order to complete the current task.

In the actual execution process, there may be more than one path that meets the task requirements, but based on the operating principle of the robot, the execution cost of the robot when passing through different paths is different. For example, when the robot is a robotic arm, when the robot is passing through different paths, the operation time required by the robot arm to switch between nodes is different. Therefore, the execution cost may be embodied in the directed graph, so as to select the best path as the target path.

As a possible implementation, the execution cost is time cost. In this example, the weight is set for each directed edge in the directed graph. The weight is configured to indicate a duration between a time of the robot executing an action instructed by a node connected by the directed edge to a time of the robot executing an action instructed by another node connected by the directed edge. The length of time required, as shown in FIG. 4(a) to FIG. 4(c), the number on the directed edge indicates a duration between a time of the execution of the action instructed by a node connected by the directed edge and a time of the action instructed by another node connected by the directed edge.

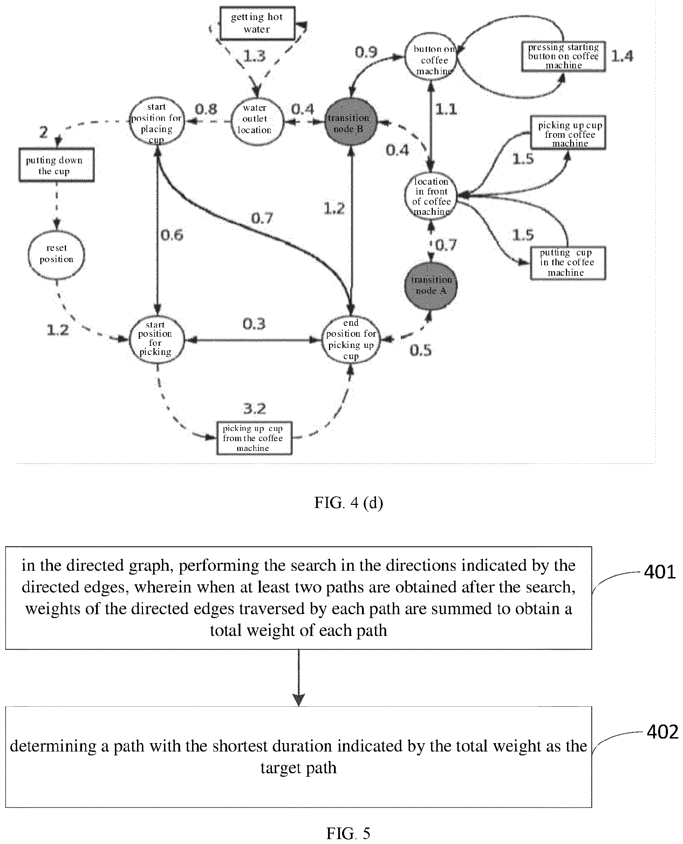

In this example, as shown in FIG. 5, the way to obtain the target path includes the following steps.

At step 401, in the directed graph, the search is performed in the directions indicated by the directed edges, in which when at least two paths are obtained after the search, weights of the directed edges traversed by each path are summed to obtain a total weight of each path.

At step 402, a path with the shortest duration indicated by the total weight is determined as the target path.

When there are a plurality of target paths that satisfy the current task, the weights of the directed edges passed by each path are summed to obtain the total weight of each path, and the path with the shortest duration indicated by the total weight is determined as the target path to ensure the shortest time for the robot to complete the task and ensure the efficiency of the robot's execution.

For example, when the current task is "getting hot water", one of the generated paths is path 1 as shown by the dashed line in FIG. 4(c), and the other path is as shown by the dashed line in FIG. 4(d), in which the weights of the directed edges that each path passes through are summed up, the total weight of path 1 is 6.9 and the total weight of path 2 is 7.3. Then path 1 is selected as the target path to ensure the efficiency of getting hot water.

In conclusion, in the method for generating an action sequence of a robot according to embodiments of the present disclosure, based on the directed graph, this method automatically determines various actions and a sequence for the robot to complete a task, which improves convenience of robot control, provides support for the robot to adapt to flexible and changeable scene tasks, and solves the problems of low control efficiency of the robot is due to manual teaching of the robot and large task load when introducing new tasks in the related art.

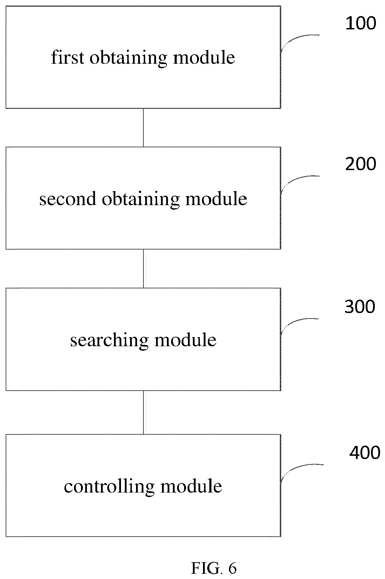

In order to realize the above-mentioned embodiments, the present disclosure also provides a robot motion sequence generating apparatus. FIG. 6 is a schematic diagram of an apparatus for generating an action sequence of a robot according to an embodiment of the present disclosure. As illustrated in FIG. 6, the apparatus includes: a first obtaining module 100, a second obtaining module 200, a searching module 300, and a controlling module 400.

The first obtaining module 100 is configured to obtain a directed graph, in which the directed graph includes a plurality of nodes for instructing actions of a robot, and directed edges connecting the nodes.

The second obtaining module 200 is configured to obtain target actions involved in a task, and an execution order of the target actions.

The searching module 300 is configured to, in the directed graph, perform a search in directions indicated by the directed edges to obtain a target path, wherein nodes on the target path comprises target nodes corresponding to the target actions, and an order of the target path passing through the target nodes matches an execution order of the target actions.

The controlling module 400 is configured to generate the action sequence of the robot according to actions instructed by the target path and an execution order of the actions instructed by the target path.

In an embodiment of the present disclosure, the nodes in the directed graph include first nodes for instructing sets of consecutive actions and second nodes for instructing static actions. In the embodiment, the searching module 300 is further configured to, in the directed graph, perform the search in the directions indicated by the directed edges starting from a preset one of the second nodes, passing through the target nodes, and ending at the preset one of the second nodes, in which the target nodes belong to the first nodes for instructing the sets of consecutive actions; and according to paths obtained after the search, determine the target path.

In an embodiment of the present disclosure, each directed edge in the directed graph has a weight, and the weight is configured to indicate a duration between a time of the robot executing an action instructed by a node connected by the directed edge to a time of the robot executing an action instructed by another node connected by the directed edge. In the embodiment, the searching module 300 is further configured to, in the directed graph, perform the search in the directions indicated by the directed edges, in which when at least two paths are obtained after the search, weights of the directed edges traversed by each path are summed to obtain a total weight of each path; and determine a path with the shortest duration indicated by the total weight as the target path.

In an embodiment of the present disclosure, the static actions indicated by the second nodes include a transition action configured to connect two actions executed before and after the transition action. In the embodiment, the controlling module 400 is further configured to: control the robot according to the action sequence of the robot; if there is an abnormality in the process of controlling the robot, determine the last action executed before the abnormality, and determine a first action to be performed after the abnormality; in the directed graph, add a second node corresponding to the transition action between a node corresponding to the last action and a node corresponding to the first action; according to a direction of a directed edge between the node corresponding to the last action and the node corresponding to the first action, determine a direction of a directed edge between the second node corresponding to the transition action and the node corresponding to the last action, and determine a direction of a directed edge between the second node corresponding to the transition action and the node corresponding to the first action; and delete the directed edge between the node corresponding to the last action and the node corresponding to the first action.

In the embodiment, the controlling module 400 is configured to determine parameters of the transition action according to a location of an obstacle indicated by the abnormality; and according to the parameters of the transition action, add the second node corresponding to the transition action.

In the embodiment, the controlling module 400 is configured to arrange control instructions associated with actions in the action sequence of the robot according to the execution order of the actions; and control the robot according to the control instructions arranged.

It should be noted that the foregoing explanation of the embodiment of the method for generating an action sequence of a robot is also applicable to the apparatus for generating an action sequence of a robot of this embodiment, and its implementation principles are similar, which is not repeated herein.

In conclusion, with the apparatus for generating an action sequence of a robot according to embodiments of the present disclosure, based on the directed graph, this apparatus automatically determines various actions and a sequence for the robot to complete a task, which improves convenience of robot control, provides support for the robot to adapt to flexible and changeable scene tasks, and solves the problems of low control efficiency of the robot is due to manual teaching of the robot and large task load when introducing new tasks in the related art.

To achieve the above embodiments, the embodiments of the present disclosure further provides a computer device including: a memory, a processor, and a computer program stored in the memory and capable of running on the processor, in which when the processor executes the program, the method for generating the action sequence of the robot according to the embodiments is implemented.

To achieve the above embodiments, the embodiments of the present disclosure further provides a computer-readable storage medium having a computer program stored thereon, in which the program is executed by a processor to implement the method for generating the action sequence of the robot according to the embodiments.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

In addition, terms such as "first" and "second" are used herein for purposes of description and are not intended to indicate or imply relative importance or significance. Thus, the feature defined with "first" and "second" may comprise one or more this feature. In the description of the present disclosure, "a plurality of' means at least two, for example, two or three, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in the embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or CD, etc. Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be included. The storage medium may be a magnetic disk, an optical disk, a read-only memory (ROM), a random access memory (RAM), or the like.

The above are only specific embodiments of the present disclosure, but the protection scope of the present disclosure is not limited thereto. Changes or substitutions within the technical scope that can be easily understood by those skilled in the art shall be covered by the protection scope of this disclosure. Therefore, the protection scope of the present disclosure should be referred to the protection scope of the claims.

## Claims

1. A method for generating an action sequence of a robot, comprising:
obtaining a directed graph, wherein the directed graph comprises a plurality of nodes for instructing actions of the robot, and directed edges connecting the nodes;
obtaining target actions involved in a task, and an execution order of the target actions;
in the directed graph, performing a search in directions indicated by the directed edges to obtain a target path, wherein nodes on the target path comprises target nodes corresponding to the target actions, and an order of the target path passing through the target nodes matches an execution order of the target actions; and
generating the action sequence of the robot according to actions instructed by the target path and an execution order of the actions instructed by the target path.

2. The method according to claim 1, wherein the nodes in the directed graph comprise first nodes for instructing sets of consecutive actions and second nodes for instructing static actions; and
in the directed graph, performing the search in the directions indicated by the directed edges to obtain the target path comprises:
in the directed graph, performing the search in the directions indicated by the directed edges starting from a preset one of the second nodes, passing through the target nodes, and ending at the preset one of the second nodes, wherein the target nodes belong to the first nodes for instructing the sets of consecutive actions; and
according to paths obtained after the search, determining the target path.

3. The method according to claim 1, wherein each directed edge in the directed graph has a weight, and the weight is configured to indicate a duration between a time of the robot executing an action instructed by a node connected by the directed edge to a time of the robot executing an action instructed by another node connected by the directed edge; and
in the directed graph, performing the search in the directions indicated by the directed edges to obtain the target path comprises:
in the directed graph, performing the search in the directions indicated by the directed edges, wherein when at least two paths are obtained after the search, weights of the directed edges traversed by each path are summed to obtain a total weight of each path; and
determining a path with the shortest duration indicated by the total weight as the target path.

4. The method according to claim 2, wherein the static actions indicated by the second nodes comprise at least one of a preset reset action, a start action in a set of consecutive actions indicated by each first node and an end action in the set of consecutive actions indicated by each first node.

5. The method according to claim 2, wherein the static actions indicated by the second nodes comprise a transition action configured to connect two actions executed before and after the transition action; and
after generating the action sequence of the robot, the method further comprises:
controlling the robot according to the action sequence of the robot;
if there is an abnormality in the process of controlling the robot, determining the last action executed before the abnormality, and determining a first action to be performed after the abnormality;
in the directed graph, adding a second node corresponding to the transition action between a node corresponding to the last action and a node corresponding to the first action;
according to a direction of a directed edge between the node corresponding to the last action and the node corresponding to the first action, determining a direction of a directed edge between the second node corresponding to the transition action and the node corresponding to the last action, and determining a direction of a directed edge between the second node corresponding to the transition action and the node corresponding to the first action; and
deleting the directed edge between the node corresponding to the last action and the node corresponding to the first action.

6. The method according to claim 5, wherein the adding the second node corresponding to the transition action comprises:
determining parameters of the transition action according to a location of an obstacle indicated by the abnormality; and
according to the parameters of the transition action, adding the second node corresponding to the transition action.

7. The method according to any one of claims 2 or 4-6, wherein the sets of consecutive actions indicated by the first nodes in the directed graph is determined based on subtasks obtained by disassembling the task, and each set of consecutive actions is configured to execute a corresponding subtask, and the directions of the directed edges in the directed graph are determined according to a logical sequence of different sets of consecutive actions.

8. The method according to any one of claims 1-7, wherein after generating the action sequence of the robot, the method further comprises:
arranging control instructions associated with actions in the action sequence of the robot according to the execution order of the actions; and
controlling the robot according to the control instructions arranged.

9. An apparatus for generating an action sequence of a robot, comprising:
a first obtaining module, configured to obtain a directed graph, wherein the directed graph comprises a plurality of nodes for instructing actions of the robot, and directed edges connecting the nodes;
a second obtaining module, configured to obtain target actions involved in a task, and an execution order of the target actions;
a searching module, configured to, in the directed graph, perform a search in directions indicated by the directed edges to obtain a target path, wherein nodes on the target path comprises target nodes corresponding to the target actions, and an order of the target path passing through the target nodes matches an execution order of the target actions; and
a controlling module, configured to generate the action sequence of the robot according to actions instructed by the target path and an execution order of the actions instructed by the target path.

10. The apparatus according to claim 9, wherein the nodes in the directed graph comprise first nodes for instructing sets of consecutive actions and second nodes for instructing static actions; and
the searching module is further configured to, in the directed graph, perform the search in the directions indicated by the directed edges starting from a preset one of the second nodes, passing through the target nodes, and ending at the preset one of the second nodes, wherein the target nodes belong to the first nodes for instructing the sets of consecutive actions; and according to paths obtained after the search, determine the target path.

11. The apparatus according to claim 9, wherein each directed edge in the directed graph has a weight, and the weight is configured to indicate a duration between a time of the robot executing an action instructed by a node connected by the directed edge to a time of the robot executing an action instructed by another node connected by the directed edge; and
the searching module is further configured to, in the directed graph, perform the search in the directions indicated by the directed edges, wherein when at least two paths are obtained after the search, weights of the directed edges traversed by each path are summed to obtain a total weight of each path; and determine a path with the shortest duration indicated by the total weight as the target path.

12. The apparatus according to claim 9, wherein the static actions indicated by the second nodes comprise a transition action configured to connect two actions executed before and after the transition action; and
the controlling module is further configured to:
control the robot according to the action sequence of the robot;
if there is an abnormality in the process of controlling the robot, determine the last action executed before the abnormality, and determine a first action to be performed after the abnormality;
in the directed graph, add a second node corresponding to the transition action between a node corresponding to the last action and a node corresponding to the first action;
according to a direction of a directed edge between the node corresponding to the last action and the node corresponding to the first action, determine a direction of a directed edge between the second node corresponding to the transition action and the node corresponding to the last action, and determine a direction of a directed edge between the second node corresponding to the transition action and the node corresponding to the first action; and
delete the directed edge between the node corresponding to the last action and the node corresponding to the first action.

13. The apparatus according to claim 12, wherein the controlling module is configured to determine parameters of the transition action according to a location of an obstacle indicated by the abnormality; and according to the parameters of the transition action, add the second node corresponding to the transition action.

14. The apparatus according to any one of claims 9-13, wherein the controlling module is further configured to:
arrange control instructions associated with actions in the action sequence of the robot according to the execution order of the actions; and
control the robot according to the control instructions arranged.

15. A computer device, comprising: a memory, a processor, and a computer program stored in the memory and capable of running on the processor, wherein when the processor executes the program, the method for generating the action sequence of the robot according to any one of claims 1-8 is implemented.

16. A computer-readable storage medium having a computer program stored thereon, wherein the program is executed by a processor to implement the method for generating the action sequence of the robot according to any one of claims 1-8.
